(19)

**Europäisches Patentamt**
**European Patent Office**
**Office européen des brevets**

(11) **EP 4 589 304 A1**

(12) **EUROPÄISCHE PATENTANMELDUNG**

(43) Veröffentlichungstag:
**23.07.2025 Patentblatt 2025/30**

(21) Anmeldenummer: **25150846.1**

(22) Anmeldetag: **09.01.2025**

(51) Internationale Patentklassifikation (IPC):
**G01P 21/02** (2006.01)   **G01P 3/481** (2006.01)
**G01D 5/12** (2006.01)

(52) Gemeinsame Patentklassifikation (CPC):
**G01P 21/02; G01P 3/481**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **17.01.2024 DE 102024200422**

(71) Anmelder: **Robert Bosch GmbH**
**70442 Stuttgart (DE)**

(72) Erfinder: **Weir, Dennis**
**44135 Dortmund (DE)**

(54) **VERFAHREN ZUM BESTIMMEN EINER DREHZAHL EINER DREHBAREN WELLE MIT HILFE EINES GEBERRADS, RECHENEINHEIT, COMPUTERPROGRAMM UND COMPUTERLESBARER DATENTRÄGER ZUM DURCHFÜHREN VERFAHREN**

(57)    Die Erfindung betrifft Verfahren zum Bestimmen einer Drehzahl einer drehbaren Welle mit Hilfe eines mit der Welle drehfest verbundenen Geberrads, das eine Vielzahl von Markierungen aufweist, umfassend ein Abtasten (210) des Geberrads und Erzeugen eines Geberradsignals; ein Bestimmen (220) eines aktuellen Messwerts der Drehzahl als eine Differenz zwischen dem Doppelten des aktuellen Messwerts der Drehzahl und einem zuletzt bestimmten korrigierten Wert der Drehzahl und/oder ein Bestimmen (260) eines prädizierten Werts der Drehzahl abhängig von dem aktuellen Messwert der Drehzahl und/oder von dem korrigierten Wert der Drehzahl und abhängig von einer prädizierten Steigung der Drehzahl über die Zeit, wobei eine Krümmung des Geberradsignals in die Zukunft fortgesetzt wird.

Fig. 1

**Beschreibung**

Die vorliegende Erfindung betrifft ein Verfahren zum Bestimmen einer Drehzahl einer drehbaren Welle mit Hilfe eines Geberrads sowie eine Recheneinheit und ein Computerprogramm zu dessen Durchführung.

Hintergrund der Erfindung

Zur Ermittlung der Drehzahl einer drehbaren Welle, z.B. einer Abtriebswelle eines Getriebes oder einer Kurbelwelle eines (Kraft-) Fahrzeugs, kann ein mit der Welle drehfest verbundenes Geberrad mittels eines Sensors abgetastet werden, wobei das Geberrad eine Vielzahl von Markierungen aufweisen kann. Das Vorbeistreichen einer Markierung infolge der Wellendrehung kann durch den Sensor erfasst und als elektrisches Signal an eine Auswertelektronik weitergegeben werden. Aufgrund des bekannten Winkelabstands zweier Markierungen zueinander kann aus der Zeitdifferenz zwischen zwei Markierungen die Drehzahl ermittelt werden.

Bei Kraftfahrzeugen können die Markierungen beispielweise durch Zähne eines metallischen Geberrads bereitgestellt werden, welche durch ihre Bewegung in dem Sensor eine Änderung des Magnetfelds bewirken. Eine Lücke von einigen Zähnen kann als Bezugsmarke zur Erkennung der absoluten Position dienen. Beispielsweise kann für eine Kurbelwellen-Geberrad eines PKWs 60-2 Zähne verwendet werden (gleichmäßige Verteilung von 60 Zähnen, wobei zwei ausgespart bleiben). Bei Motor- bzw. Krafträdern können beispielweise auch 36-2, 24-2 oder 12-3 Zähne verwendet werden.

Die vorliegende Erfindung strebt eine Verbesserung derartiger Verfahren zur Drehzahlbestimmung mittels eines Geberrads an.

Offenbarung der Erfindung

Erfindungsgemäß werden ein Verfahren zum Bestimmen einer Drehzahl einer drehbaren Welle mit Hilfe eines Geberrads sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Das Geberrad ist mit der Welle drehfest verbunden und weist eine Vielzahl von Markierungen auf, z.B. in Form von Zähnen. Beispielsweise kann das Geberrad ferner eine Referenzmarkierung aufweisen, z.B. in Form einer Lücke von einigen Zähnen.

Das Geberrad wird abgetastet, insbesondere mittels eines geeigneten Sensors, z.B. mittels eines Hall-Sensors. Auf diese Weise wird ein Geberradsignal erzeugt. Ein aktueller Messwert der Drehzahl bzw. ein aktueller, messwertbasierter bzw. geberradsignalbasierter Wert der Drehzahl wird abhängig von charakteristischen Merkmalen in dem Geberradsignal bestimmt. Die charakteristischen Merkmale werden in dem Geberradsignal jeweils insbesondere erzeugt, wenn eine jeweilige Markierung des Geberrads an dem Sensor vorbeistreicht. Beispielsweise können diese charakteristischen Merkmale steigende und/oder fallende Flanken sein. Der aktuelle Messwert der Drehzahl wird insbesondere abhängig von einer Zeitdifferenz zwischen zwei charakteristischen Merkmalen des Geberradsignals bestimmt, insbesondere zwischen zwei unmittelbar aufeinanderfolgenden Merkmalen, insbesondere zwischen einem aktuellen Merkmal und einem letzten bzw. zuletzt detektierten Merkmal, insbesondere zwischen zwei aufeinanderfolgenden Flanken. Es können zwei aufeinanderfolgenden Flanken derselben Richtung oder Flanken unterschiedlicher Richtung sein. Aufgrund des bekannten Winkelabstands zwischen den jeweiligen Markierungen des Geberrads zueinander kann aus dieser Zeitdifferenz zwischen den jeweiligen charakteristischen Merkmalen des Geberradsignals der aktuelle Messwert der Drehzahl bestimmt werden.

Auf diese Weise wird die Drehzahl nicht selbst gemessen, sondern es werden zeitliche Abstände von Markierungen des Geberrads gemessen und die Drehzahl wird indirekt aus der Zeitdifferenz zwischen den Markierungen und dem bekannten Winkelabstand bestimmt. Der auf diese Weise bestimmte aktuelle Messwert der Drehzahl ist insbesondere bei einem dynamischem (d.h. beschleunigtem oder verzögertem) Geberradsignal nur ein Durchschnittswert über die Zeit, was zu Abweichungen von dem tatsächlichen Drehzahlwert führen kann. Ferner werden bei langsamen Drehzahlen nur selten Markierungen des Geberrads erfasst, was zu einer langsamen Aktualisierungsrate des Drehzahlmesswerts und zu Abweichungen von dem tatsächlichen Drehzahlwert führen kann.

Im Rahmen der Erfindung werden zwei miteinander kombinierbare Ansätze vorgeschlagen, um die Genauigkeit des messwert- bzw. geberradsignalbasierten, aktuellen Messwerts der Drehzahl zu verbessern.

Erfindungsgemäß wird ein korrigierter Wert der Drehzahl bestimmt als eine Differenz zwischen dem Doppelten des aktuellen Messwerts der Drehzahl und einem zuletzt bestimmten korrigierten Wert der Drehzahl. Auf diese Weise wird insbesondere eine Messwertkorrektur des aktuellen Messwerts vorgenommen, wobei dieser erste Ansatz mathematisch insbesondere auf einer lokalen Linearisierung des Eingangssignals zur Korrektur der Mittelwertbildung basiert. Eine derartige Beziehung kann mittels lokaler Linearisierung als eine besonders präzise Korrektur des aktuellen Messwerts der Drehzahl mathematisch hergeleitet werden.

Alternativ oder zusätzlich wird ein prädizierter Wert der Drehzahl bestimmt abhängig von dem aktuellen Messwert der Drehzahl und/oder von dem korrigierten Wert der Drehzahl sowie ferner abhängig von einer prädizierten Steigung der Drehzahl über die Zeit, wobei die prädizierte Steigung erhalten wird, indem eine Krümmung des Geberradsignals in die Zukunft fortgesetzt wird. Dieser zweite Ansatz basiert demnach auf einer Fortsetzung einer Krümmung des Signals der Drehzahl über die Zeit bis zu einem nächsten Messwert, insbesondere bis eine nächste Flanke des Geberradsignals mit dem Sensor abgetastet wird.

Die Erfindung stellt somit eine Möglichkeit bereit, um die Genauigkeit bei der Bestimmung der aktuellen Drehzahl der Welle zu erhöhen. Ungenauigkeiten in der Messung und Abweichungen von der tatsächlichen Drehzahl können reduziert oder vermieden werden. Insbesondere kann die Genauigkeit des Messwerts der Drehzahl verbessert werden, der bei einem dynamischen Signal nur ein Durchschnittswert über die Zeit ist. Besonders zweckmäßig kann dies durch den korrigierten Wert der Drehzahl erreicht werden. Ferner kann die aktuelle Drehzahl zweckmäßigerweise auch bei langsamen Drehzahlen präzise bestimmt werden, wenn Flanken seltener an dem Sensor vorbeikommen. Auch in einem derartigen Fall kann insbesondere eine hohe Aktualisierungsrate der aktuellen Drehzahl erreicht werden, insbesondere durch Bestimmen des prädizierten Werts der Drehzahl.

Gemäß einer Ausführungsform werden der korrigierte Wert der Drehzahl und/oder der prädizierte Wert der Drehzahl bestimmt, wenn eine Periodendauer des Geberradsignals einen vorgegebenen Schwellwert erreicht oder überschreitet. Insbesondere charakterisiert dieser Schwellwert eine langsame Drehzahl der Welle, bei welcher es zu Ungenauigkeiten bei der rein geberradsignalbasierten Bestimmung des aktuellen Messwerts der Drehzahl kommen kann. In rein beispielhaften typischen Anwendungsfällen mit üblichen zweistelligen oder niedrigen dreistelligen Zahnzahlen kann dieser Schwellwert eine Drehzahl von 100 Umdrehungen pro Minute charakterisieren, ferner insbesondere eine Drehzahl von 75 Umdrehungen pro Minute, ferner insbesondere eine Drehzahl von 50 Umdrehungen pro Minute, ferner insbesondere eine Drehzahl von 25 Umdrehungen pro Minute. Je nach Anwendungsfall kann sich der Schwellwert sowohl nach oben als auch nach unten verändern.

Gemäß einer Ausführungsform erfolgt das Bestimmen des korrigierten Werts der Drehzahl nach Bestimmen bzw. nach Auftreten eines aktuellen charakteristischen Merkmals in dem Geberradsignal. Insbesondere wird der korrigierte Wert unmittelbar nach dem Auftreten des aktuellen charakteristischen Merkmals bzw. unmittelbar nach Bestimmen des aktuellen Messwerts der Drehzahl abhängig von diesem aktuellen charakteristischen Merkmal bestimmt. Zweckmäßigerweise erfolgt das Bestimmen des korrigierten Werts einmalig nach dem Auftreten des aktuellen charakteristischen Merkmals.

Gemäß einer Ausführungsform erfolgt das Bestimmen des prädizierten Werts der Drehzahl nach dem Bestimmen des korrigierten Werts der Drehzahl, insbesondere wiederholt z.B. in regelmäßigen Zeitabständen, insbesondere bis zu dem Bestimmen bzw. dem Auftreten eines nächsten charakteristischen Merkmals in dem Geberradsignal. Mittels des korrigierten Werts kann zweckmäßigerweise der aktuelle Messwert der Drehzahl insbesondere unmittelbar nach dem Auftreten des aktuellen charakteristischen Merkmals in dem Geberradsignal korrigiert bzw. verbesswert werden. Mittels des prädizierten Werts kann zweckmäßigerweise ausgehend von dem korrigierten Wert ein möglichst präziser aktueller Wert für die Drehzahl bis zu dem Auftreten des nächsten charakteristischen Merkmals in dem Geberradsignal abgeschätzt werden.

Für diese Herleitung des korrigierten Werts der Drehzahl mittels der lokalen Linearisierung kann der Geschwindigkeits- bzw. Drehzahlverlauf $n(t)$ für geringe Zykluszeiten und langsame bzw. träge Drehzahlen zweckmäßigerweise gemäß folgender Formel (1) lokal linear angenähert werden:

$$n(t) = at + n_0 \qquad (1)$$

Dabei ist $a$ die Steigung des Drehzahlverlaufs und $n_0$ ein Anfangswert bzw. eine Konstante.

Der Rotationswinkel $\theta(t)$ der Geberradmarkierung, z.B. des Zahnrads, auf der die Messung stattfindet, kann durch Integration gemäß folgender Formel ermittelt werden:

$$\theta(t) = \int_{t_1}^{t_2} (a\tau + n_0)d\tau = \left[\frac{a\tau^2}{2} + n_0\tau\right]_{t_1}^{t_2} \qquad (2)$$

Die gemessene Drehzahl bzw. der aktuelle Messwert der Drehzahl zwischen zwei charakteristischen Merkmalen des Geberradsignals, z.B. zwischen zwei Zahnflanken, kann dargestellt werden gemäß folgender Formel:

$$n_{meas,i}(t_{f,i}, t_{f,i-1}) = \frac{\int_{t_{f,i-1}}^{t_{f,i}} n(\tau)d\tau}{t_{f,i} - t_{f,i-1}} = \frac{\left[\frac{a\tau^2}{2} + n_0\tau\right]_{t_{f,i-1}}^{t_{f,i}}}{t_{f,i} - t_{f,i-1}}$$

$$= \frac{\frac{a}{2}t_{f,i}^2 + n_0 t_{f,i} - \frac{a}{2}t_{f,i-1}^2 - n_0 t_{f,i-1}}{t_{f,i} - t_{f,i-1}}$$

$$= \frac{\frac{a}{2}\left(t_{f,i}^2 - t_{f,i-1}^2\right) + n_0\left(t_{f,i} - t_{f,i-1}\right)}{t_{f,i} - t_{f,i-1}}$$

$$= \frac{\frac{a}{2}\left(t_{f,i} + t_{f,i-1}\right)\left(t_{f,i} - t_{f,i-1}\right) + n_0\left(t_{f,i} - t_{f,i-1}\right)}{t_{f,i} - t_{f,i-1}}$$

$$= \frac{a}{2}\left(t_{f,i} + t_{f,i-1}\right) + n_0$$

$$= a t_{f,i} - \frac{a}{2}t_{f,i} + \frac{a}{2}t_{f,i-1} + n_0$$

$$= a t_{f,i} + n_0 - \frac{a}{2}t_{f,i} + \frac{a}{2}t_{f,i-1}$$

$$= n_{act,i}(t_{f,i}) - \frac{a}{2}\left(t_{f,i} + t_{f,i-1}\right) \tag{3}$$

Dabei ist $n_{act,i}(t_{f,i})$ der korrigierte Wert der Drehzahl, $n_{meas,i}(t_{f,i}, t_{f,i-1})$ der aktuelle Messwert der Drehzahl, $t_{f,i}$ ein Zeitpunkt, zu welchem ein aktuelles charakteristisches Merkmal in dem Geberradsignal auftaucht, und $t_{f,i-1}$ ein Zeitpunkt, zu welchem ein letztes charakteristisches Merkmal zeitlich vor dem aktuellen charakteristischen Merkmal in dem Geberradsignal aufgetaucht ist.

Die Gleichung (3) kann wie folgt umgestellt werden:

$$n_{act,i}(t_{f,i}) = n_{meas,i}(t_{f,i}, t_{f,i-1}) + \frac{a}{2}\left(t_{f,i} + t_{f,i-1}\right) \tag{4}$$

Die Steigung kann linear genähert werden durch folgende Gleichung:

$$a = \frac{n_{act,i} - n_{act,i-1}}{t_{f,i} - t_{f,i-1}} \tag{5}$$

Dabei ist $n_{act,i-1}$ der zuletzt bestimmte Wert der Drehzahl, insbesondere der zuletzt bestimmte korrigierte Wert der Drehzahl.

Eine Kombination der Formeln (4) und (5) ergibt folgende Beziehungen:

$$n_{act,i}(t_{f,i}) = n_{meas,i}(t_{f,i}, t_{f,i-1}) + \frac{(n_{act,i} - n_{act,i-1})}{2}\frac{(t_{f,i} - t_{f,i-1})}{(t_{f,i} - t_{f,i-1})} \tag{6}$$

$$\frac{n_{act,i}(t_{f,i})}{2} = n_{meas,i}(t_{f,i}, t_{f,i-1}) - \frac{n_{act,i-1}}{2} \tag{7}$$

$$n_{act,i}(t_{f,i}) = 2\,n_{meas,i}(t_{f,i}, t_{f,i-1}) - n_{act,i-1} \tag{8}$$

Gemäß einer Ausführungsform wird der korrigierte Wert der Drehzahl anhand der obigen Formel (8) bestimmt.

Diese Gleichung (8) stellt insbesondere eine Approximation des aktuellen Realwerts anhand lokaler Linearisierung dar, auf Basis des aktuellen Messwerts und der letzten berechneten Geschwindigkeit.

Gemäß einer Ausführungsform wird der prädizierte Wert der Drehzahl anhand der folgenden Formel (9) bestimmt:

$$n(t) = n(t_f) + a_3(t - t_f) \hspace{3cm} (9)$$

Dabei ist n(t) der prädizierte Wert der Drehzahl zu einem Zeitpunkt $t$, $n(t_f)$ der aktuelle Messwert der Drehzahl oder der korrigierte Wert der Drehzahl, $a_3$ die prädizierte Steigung und $t_f$ ein Zeitpunkt, zu welchem ein aktuelles charakteristisches Merkmal in dem Geberradsignal auftaucht. Mittels dieser Gleichung (9) kann der Drehzahlwert zu einem bestimmten Zeitpunkt t nach Auftreten des letzten charakteristischen Merkmals in dem Geberradsignal besonders präzise abgeschätzt bzw. angenähert werden, insbesondere wenn als Ausgangspunkt $n(t_f)$ der korrigierte Wert der Drehzahl gemäß Gleichung (8) verwendet wird.

Für die Herleitung dieser Formel (9) wird ein Signal der Drehzahlwerte über die Zeit fortgesetzt bzw. prädiziert. Es sei beispielsweise angenommen, dass dieses Drehzahlsignal einen ersten Abschnitt mit einer ersten Steigung und einen zweiten Abschnitt mit einer zweiten Steigung aufweist, wobei die erste Steigung in dem ersten Abschnitt und die zweite Steigung in dem in dem zweiten Abschnitt jeweils konstant sind. Dieser Drehzahlverlauf wird nun durch einen prädizierten dritten Abschnitt mit der prädizierten Steigung fortgesetzt.

Es wird beispielsweise angenommen, dass sich die dritte Steigung zur zweiten Steigung so verhält wie die zweite Steigung zur ersten Steigung.

Gemäß einer Ausführungsform wird die prädizierte Steigung der Drehzahl abhängig von der ersten Steigung des ersten Abschnitts der Drehzahl und abhängig von der zweiten Steigung des zweiten Abschnitts der Drehzahl bestimmt.

Gemäß einer Ausführungsform liegt der erste Abschnitt zwischen einem ersten Zeitpunkt und einem zweiten Zeitpunkt, wobei zu dem ersten Zeitpunkt ein erstes charakteristisches Merkmal in dem Geberradsignal auftaucht, insbesondere ein vorletztes Merkmal, und wobei zu dem zweiten Zeitpunkt ein zweites charakteristisches Merkmal in dem Geberradsignal auftaucht, insbesondere ein letztes Merkmal. Der zweite Zeitpunkt liegt zeitlich insbesondere nach dem ersten Zeitpunkt. Der zweite Abschnitt verläuft zwischen dem zweiten Zeitpunkt und einem dritten Zeitpunkt, wobei zu diesem dritten Zeitpunkt ein drittes charakteristisches Merkmal in dem Geberradsignal auftaucht, insbesondere ein aktuelles Merkmal. Der dritte Zeitpunkt liegt zeitlich insbesondere nach dem zweiten Zeitpunkt.

Für die Herleitung der Formel (9) wird der Drehzahlverlauf durch den prädizierten, dritten Abschnitt fortgesetzt, wobei angenommen wird, dass ein Winkel $\theta$ zwischen dem ersten Abschnitt und dem zweiten Abschnitt identisch ist zu dem Winkel zwischen dem zweiten Abschnitt und dem dritten Abschnitt. Die einzelnen Abschnitte der Drehzahl können in Vektoren übersetzt werden, wobei dann die obige Gleichung (1) in folgende Vektorbetrachtung übersetzt werden kann:

$$\vec{v_n} = \begin{pmatrix} 1 \\ a \end{pmatrix} \hspace{3cm} (10)$$

Der Winkel $\theta$ zwischen zwei Vektoren kann berechnet werden durch folgende Formel:

$$\cos\theta = \frac{\vec{v_1} \cdot \vec{v_2}}{|\vec{v_1}||\vec{v_2}|} \hspace{3cm} (11)$$

Da angenommen wird, dass der Winkel zwischen dem ersten Abschnitt und dem zweiten Abschnitt identisch ist zu dem Winkel zwischen dem zweiten Abschnitt und dem dritten Abschnitt, gilt folgende Beziehung:

$$\frac{\vec{v_1} \cdot \vec{v_2}}{|\vec{v_1}||\vec{v_2}|} = \frac{\vec{v_2} \cdot \vec{v_3}}{|\vec{v_2}||\vec{v_3}|} \hspace{3cm} (12)$$

Daraus ergibt sich folgende Beziehung:

$$a_3{}^2 - a_3\left(\frac{2a_2 + 2a_1{}^2 a_2}{1 + 2a_1 a_2 - a_2{}^2}\right) + \left(\frac{2a_1 a_2 + a_1{}^2 a_2{}^2 - a_1{}^2}{1 + 2a_1 a_2 - a_2{}^2}\right) = 0 \hspace{2cm} (13)$$

Die Gleichung (13) hat zwei Lösungen:

$$a_{3,1} = \frac{2a_2 - a_1 + a_1 a_2{}^2}{1 + 2a_1 a_2 - a_2{}^2} \qquad (14)$$

$$a_{3,2} = a_1 \qquad (15)$$

Die zweite Lösung gemäß Gleichung (15) würde die ursprüngliche Steigung des ersten Abschnitts wiederherstellen. Daher wird die erste Lösung gemäß Gleichung (14) verwendet.

Gemäß einer Ausführungsform wird die prädizierte Steigung $a_3$ daher gemäß folgender Formel bestimmt:

$$a_3 = \frac{2a_2 - a_1 + a_1 a_2{}^2}{1 + 2a_1 a_2 - a_2{}^2} \qquad (16)$$

Diese Lösung ist jedoch nur dann definiert, wenn der Nenner ungleich 0 ist. Dies bedeutet, dass ferner folgende Ungleichung gilt:

$$2a_1 a_2 - a_2{}^2 \neq 1 \qquad (17)$$

Sollte dieser Fall zutreffen, kann ersatzweise auch die letzte, zweite Steigung als prädizierte Steigung verwendet werden.

Gemäß einer Ausführungsform ist die sich drehende Welle eine Welle in einem (Kraft-) Fahrzeug, insbesondere eine Getriebewelle, eine Abtriebswelle, eine Antriebswelle oder eine Kurbelwelle. Besonderes zweckmäßig kann die Welle in einem Gang-Schaltgetriebe für elektrische Antriebe verwendet werden. Ungenauigkeiten bei der Bestimmung des aktuellen Messwerts der Drehzahl bzw. des aktuellen, rein geberradsignalbasierten Werts der Drehzahl können sich auf eine Genauigkeit der Drehzahlsynchronisation auswirken. Abweichungen in der Differenzdrehzahl können zu mehr Schaltruck führen (zu viel Differenzdrehzahl) oder zu mehr Schaltzeiten bzw. zu Problemen überhaupt einzukuppeln (zu wenig Differenzdrehzahl). Dies kann zu Problemen beim Komfort oder der Robustheit der Schaltung führen. Besonders zweckmäßig können durch das Bestimmen des korrigierten Werts und/oder des prädizierten Werts der Schaltkomfort und die Schaltrobustheit verbessert werden.

Die Erfindung eignet sich ferner für eine Vielzahl von technischen Anwendungen, in welchen die Drehzahl einer sich drehenden Welle bestimmt werden soll, z.B. in den Bereichen der Automatisierungstechnik, des Semiconductor-Handlings, der Robotik usw. Beispielsweise eignet sich die Erfindung für Werkzeugmaschinen, z.B. Schraubsysteme, für Bahnbearbeitungsmaschinen, z.B. Druckmaschinen, für Verpackungsmaschinen, für (Band-) Anlagen zur Herstellung eines Automobils oder zur Herstellung von Komponenten eines Automobils (z.B. Verbrennungsmotoren oder Steuergeräte) usw.

Eine erfindungsgemäße Recheneinheit, z.B. ein Steuergerät eines Fahrzeugs, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1     zeigt schematisch eine Brennkraftmaschine, die einer Ausführungsform eines erfindungsgemäßen Verfahrens zugrunde liegen kann.

Figur 2   zeigt schematisch eine Ausführungsform eines erfindungsgemäßen Verfahrens als ein Blockdiagramm.

Figur 3   zeigt schematisch ein Diagramm einer Drehzahl aufgetragen gegen die Zeit, das im Zuge einer Ausführungsform eines erfindungsgemäßen Verfahrens bestimmt werden kann.

Figur 4   zeigt schematisch ein Diagramm einer Drehzahl aufgetragen gegen die Zeit, das im Zuge einer Ausführungsform eines erfindungsgemäßen Verfahrens bestimmt werden kann.

Figur 5   zeigt schematisch ein Diagramm einer Drehzahl aufgetragen gegen die Zeit, das im Zuge einer Ausführungsform eines erfindungsgemäßen Verfahrens bestimmt werden kann.

Detaillierte Beschreibung der Zeichnung

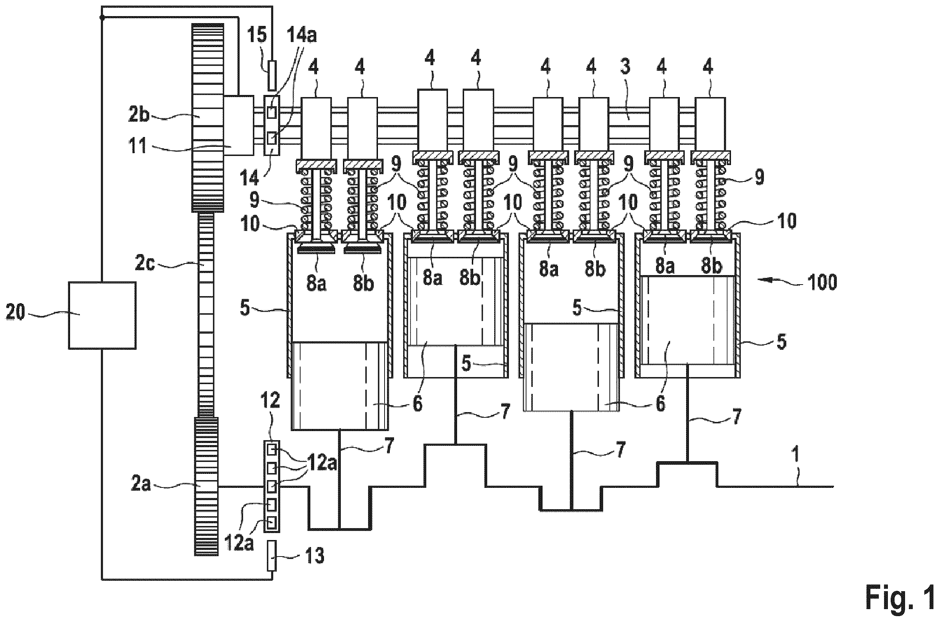

In Figur 1 ist ein Ausschnitt einer Brennkraftmaschine eines Fahrzeugs schematisch dargestellt und mit 100 bezeichnet.

Eine Kurbelwelle 1 der Brennkraftmaschine 100 ist drehfest mit einem ersten Antriebsrad 2a verbunden. Eine Nockenwelle 3 ist drehfest mit einem zweiten Antriebsrad 2b verbunden, wobei zwischen dem Antriebsrad 2b und der Nockenwelle 3 eine Phasenverstellvorrichtung 11 vorgesehen sein kann. Die Kurbelwelle 1 treibt über einen Primärtrieb 2c, der beispielsweise als eine Kette, ein Zahnriemen oder eine Folge von Zahnrädern ausgebildet ist und formschlüssig in das erste Antriebsrad 2a und das zweite Antriebsrad 2b eingreift, eine (oder mehrere) Nockenwellen 3 an.

Die Brennkraftmaschine 100 weist ferner Zylinder 5 auf, in welchen jeweils ein beweglicher Kolben 6 angeordnet ist, der jeweils mittels einer Pleuelstange 7 an der Kurbelwelle 1 befestigt ist. Die Zylinder 5 weisen ferner Einlassventile 8a und Auslassventile 8b auf, die von Nocken 4 mit exzentrisch bezüglich der Nockenwelle 3 ausgebildeten Nockenflanken geöffnet oder geschlossen werden. Die Einlass- und Auslassventile 8a und 8b werden jeweils von einer Ventilfeder 9 in Richtung eines Ventilsitzes 10 gedrückt.

Die Kurbelwelle 1 ist drehfest mit einem Kurbelwellengeberrad 12 verbunden, an dessen Umfang bzw. Rand Markierungen 12a in Form von Zähnen angeordnet sind. Die Markierungen bzw. Zähne 12a sind in äquidistanten Abständen bzw. in regelmäßigen Winkelabständen angeordnet. Referenzmarkierungen sind als Lücken durch das Fehlen einer oder mehrerer Zähne in der ansonsten regelmäßigen Anordnung der Zähne vorgesehen. Ein Aufnehmer 13, beispielsweise ein Hall-Sensor, ist in der Nähe des Rands des Kurbelwellengeberrads 12 angeordnet und mit einem Steuergerät 20 verbunden, insbesondere mit einem Motorsteuergerät.

Analog ist die Nockenwelle 3 drehfest mit einem Nockenwellengeberrad 14 verbunden, dessen Umfang bzw. Rand Markierungen 14a in Form von Zähnen und Referenzmarkierungen in Form von Lücken aufweist. Ein Aufnehmer 15, beispielsweise ein Hall-Sensor, ist in der Nähe des Rands des Nockenwellengeberrads 14 angeordnet und mit einem Steuergerät 20 verbunden, insbesondere mit einem Motorsteuergerät.

Im Betrieb der Brennkraftmaschine 100 dreht sich die Kurbelwelle 1 und damit auch das Kurbelwellengeberrad 12. Der Aufnehmer 13 tastet das Kurbelwellengeberrad 12 ab und erzeugt ein Geberradsignal in Form eines Spannungsimpulssignals. Durch Abtasten der Markierungen 12a werden jeweils charakteristische Merkmale in dem Geberradsignal erzeugt, insbesondere jeweils steigende und fallende Flanken. Ein aktueller Messwert der Drehzahl der Kurbelwelle 1 kann abhängig von einer Zeitdifferenz zwischen zwei derartigen charakteristischen Merkmalen des Geberradsignals bestimmt werden, z.B. zwischen zwei aufeinanderfolgenden Flanken. Aufgrund des bekannten Winkelabstands zwischen den jeweiligen Markierungen 12a des Geberrads 12 zueinander kann aus dieser Zeitdifferenz auf die Drehzahl der Kurbelwelle 1 rückgeschlossen werden. Auf entsprechende Weise tastet der Aufnehmer 15 das Nockenwellengeberrad 14 ab und erzeugt ein entsprechendes Geberradsignal, aus welchem auf die Drehzahl der Nockenwelle 3 rückgeschlossen werden kann.

Ein auf diese Weise bestimmter aktueller Messwert der Drehzahl ist bei einem dynamischem Geberradsignal jedoch nur ein Durchschnittswert über die Zeit, was zu Abweichungen von dem tatsächlichen Drehzahlwert führen kann. Beispielsweise können bei langsamen Drehzahlen nur selten oder gegebenenfalls gar keine Markierungen des jeweiligen Geberrads an dem jeweiligen Sensor vorbeistreichen, was zu einer langsamen Aktualisierungsrate des Drehzahlmesswerts und zu Abweichungen von dem tatsächlichen Drehzahlwert führen kann.

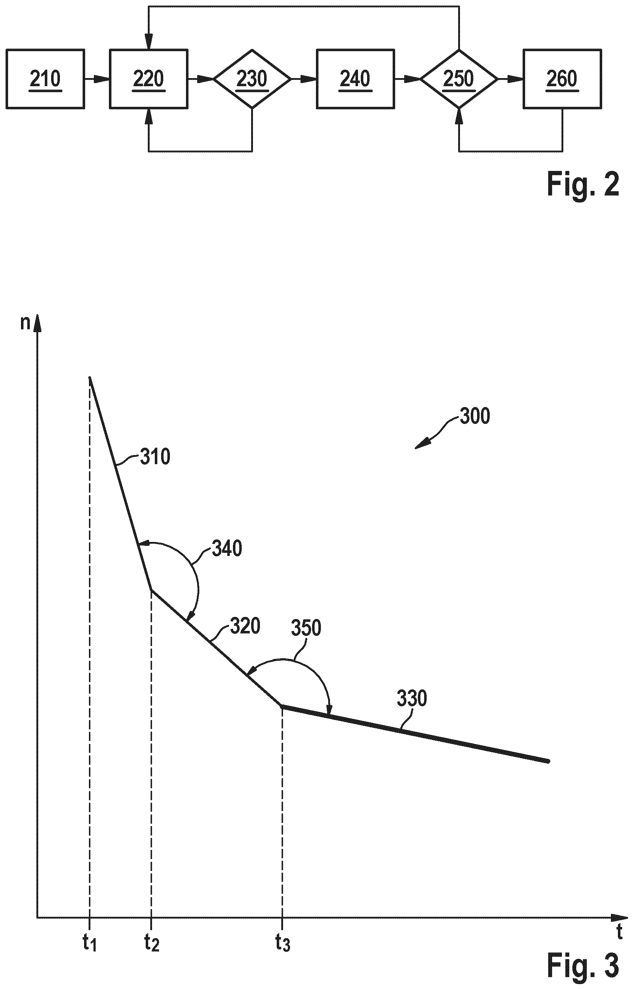

Im Rahmen der Erfindung werden daher zwei miteinander kombinierbare Ansätze vorgeschlagen, um die Genauigkeit des messwert- bzw. geberradsignalbasierten, aktuellen Messwerts der Drehzahl zu verbessern. Das Steuergerät 20 ist daher, insbesondere programmtechnisch, dazu eingerichtet, eine Ausführungsform eines erfindungsgemäßen Verfahrens durchzuführen, wie nachfolgend anhand von Figur 2 erläutert wird.

Es versteht sich, dass die Erfindung nicht auf Kurbelwellen- und Nockenwellengeberräder beschränkt sein soll, wie in Bezug auf Figur 1 beispielhaft erläutert. Die Erfindung eignet sich für eine Vielzahl unterschiedlicher Anwendungen von Geberrädern, beispielsweise für weitere Geberräder in (Kraft-) Fahrzeugen, z.B. für ein Geberrad einer Getriebewelle, z.B. einer Welle in einem Gang-Schaltgetriebe für elektrische Antriebe. Ferner eignet sich die Erfindung für Geberräder in einer Vielzahl von weiteren technischen Anwendung, z.B. in Werkzeugmaschinen, Bahnbearbeitungsmaschinen usw. Fermer kann das Geberrad beispielsweise auch direkt einem Zahnrad entsprechen, so dass das Geberradsignal auch direkt durch Abtasten dieses Zahnrads erzeugt werden kann, sofern das Zahnrad auf die Spezifikation des jeweiligen Sensors ausgelegt ist.

Figur 2 zeigt eine Ausführungsform des erfindungsgemäßen Verfahrens als ein Blockdiagramm. In Rahmen des Verfahrens wird in Schritt 210 ein Geberrad, das mit einer jeweiligen Welle drehfest verbunden ist und eine Vielzahl von Markierungen aufweist, mittels eines entsprechenden Sensors abgetastet und es wird ein Geberradsignal erzeugt.

In Schritt 220 wird ein aktueller Messwert der Drehzahl der Welle abhängig von charakteristischen Merkmalen in dem Geberradsignal bestimmt, insbesondere abhängig von einer Zeitdifferenz zwischen einem aktuellen Merkmal und einem letzten Merkmal.

In einem Schritt 230 wird überprüft, ob die Periodendauer des Geberradsignals einen vorgegebenen Schwellwert erreicht, welcher eine langsame Drehzahl der Welle charakterisiert, bei welcher es zu Ungenauigkeiten bei der rein geberradsignalbasierten Bestimmung des aktuellen Messwerts der Drehzahl kommen kann. Beispielsweise kann dieser Schwellwert eine Drehzahl von 100 Umdrehungen pro Minute charakterisieren.

Wenn dies der Fall ist, wird in Schritt 240 ein korrigierter Wert der Drehzahl als eine Differenz zwischen dem Doppelten des aktuellen Messwerts der Drehzahl und einem zuletzt bestimmten korrigierten Wert der Drehzahl bestimmt. Dieser korrigierte Wert der Drehzahl wird gemäß der weiter oben erläuterten Formel (8) bestimmt.

In einem Schritt 250 wird überprüft, ob eine neue Flanke in dem Geberradsignal auftaucht. Wenn dies der Fall ist, wird erneut ein aktueller Messwert gemäß Schritt 220 bestimmt. Solange keine neue Flanke in dem Geberradsignal detektiert wird, wird gemäß Schritt 260 ein prädizierter Wert der Drehzahl abhängig von dem aktuellen Messwert der Drehzahl oder von dem korrigierten Wert der Drehzahl und abhängig von einer prädizierten Steigung der Drehzahl über die Zeit bestimmt, wobei eine Krümmung des Geberradsignals in die Zukunft fortgesetzt wird. Dieser prädizierte Wert der Drehzahl wird gemäß der oben beschriebenen Formel (9) bestimmt. Die prädizierte Steigung der Drehzahl wird gemäß der Formel (16) bestimmt, abhängig von einer ersten Steigung in einem ersten Abschnitt der Drehzahl über die Zeit und abhängig von einer zweiten Steigung in einem zweiten Abschnitt der Drehzahl über die Zeit, wie nachfolgend in Bezug auf Figur 3 erläutert werden soll.

Figur 3 zeigt schematisch ein Diagramm 300 der Drehzahl n aufgetragen gegen die Zeit t. Der Drehzahlverlauf 300 weist ersten Abschnitt 310 mit einer ersten Steigung zwischen einem ersten Zeitpunkt $t_1$ und einem zweiten Zeitpunkt $t_2$ auf. Zu dem ersten Zeitpunkt $t_1$ taucht beispielsweise ein erstes charakteristisches Merkmal in dem Geberradsignal auf, insbesondere ein vorletztes Merkmal. Zu dem zweiten Zeitpunkt $t_2$ taucht beispielsweise ein zweites charakteristisches Merkmal in dem Geberradsignal auf, insbesondere ein letztes Merkmal. Ferner weist der Drehzahlverlauf 300 einen zweiten Abschnitt 320 mit einer zweiten Steigung auf zwischen dem zweiten Zeitpunkt $t_2$ und einem dritten Zeitpunkt $t_3$. Zu diesem dritten Zeitpunkt $t_3$ taucht beispielsweise ein drittes charakteristisches Merkmal in dem Geberradsignal auf, insbesondere ein aktuelles Merkmal.

Für die Bestimmung des prädizierten Werts der Drehzahl wird der Drehzahlverlauf 300 um einen prädizierten, dritten Abschnitt 330 mit der prädizierten Steigung fortgesetzt. Dabei wird angenommen, dass der Winkel 340 zwischen dem ersten Abschnitt 310 und dem zweiten Abschnitt 320 identisch ist zu dem Winkel 350 zwischen dem zweiten Abschnitt 320 und dem dritten Abschnitt 330. Ausgehend von dieser Annahme können gemäß den oben erläuterten Formeln (10) bis (15) die Gleichung (9) zum Bestimmen des prädizierten Werts der Drehzahl und die Gleichung (16) zum Bestimmen der prädizierten Steigung hergeleitet werden.

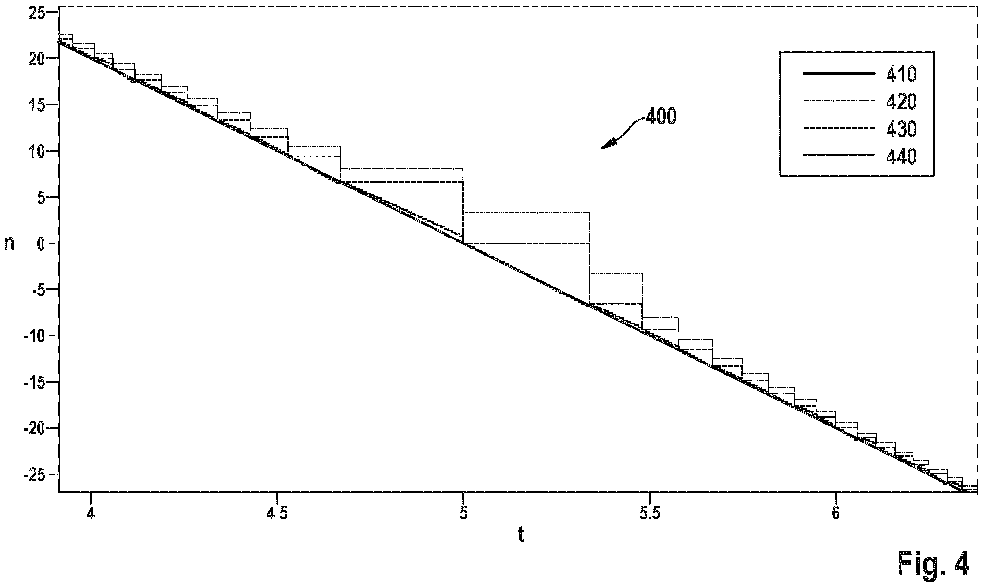

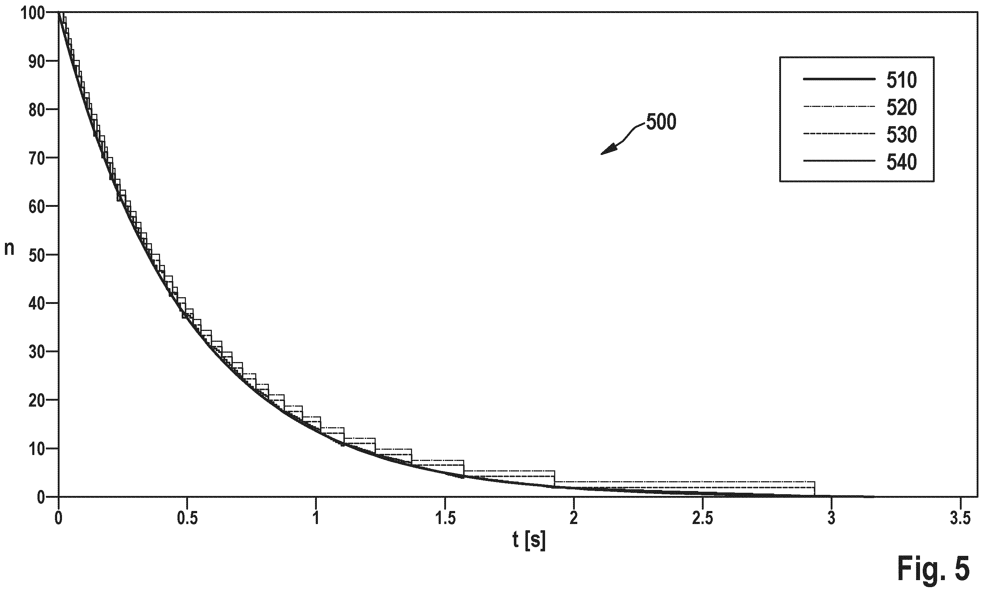

Durch das Bestimmen des korrigierten Werts der Drehzahl und des prädizierten Werts der Drehzahl kann die Genauigkeit der Bestimmung der aktuellen Drehzahl der Welle erhöht werden, wie nachfolgend anhand der Figuren 4 und 5 erläutert werden soll.

Figur 4 zeigt schematisch ein Diagramm 400 eines beispielhaften Drehzahlverlaufs n (in Umdrehungen pro Minute) aufgetragen gegen die Zeit t (in Sekunden). Kurve 410 zeigt beispielhaft einen tatsächlichen Verlauf einer Drehzahl einer jeweiligen Welle. Kurve 420 zeigt einen Verlauf von bestimmten aktuellen Messwerten der Drehzahl, also von rein messwertbasierten bzw. geberradsignalbasierten Werten der Drehzahl. Kurve 430 zeigt einen Verlauf von korrigierten Werten der Drehzahl gemäß Formel (8) abhängig von den jeweiligen Messwerten der Drehzahl. Kurve 440 zeigt einen Verlauf von prädizierten Werten der Drehzahl gemäß Formel (9) abhängig von den jeweiligen korrigierten Werten der Drehzahl (d.h. Kombination von (8) und (9)). Wie in Figur 4 zu erkennen ist, kann durch Bestimmen des korrigierten Werts der Drehzahl und des prädizierten Werts der Drehzahl die Genauigkeit der Drehzahlbestimmung deutlich erhöht werden.

Figur 5 zeigt schematisch ein Diagramm 500 der Drehzahl n (in Umdrehungen pro Minute) aufgetragen die Zeit t (in Sekunden). Kurve 510 zeigt beispielhaft einen tatsächlichen Verlauf einer Drehzahl einer jeweiligen Welle. Der Drehzahlverlauf 510 ist dabei ein gekrümmter Verlauf, im Gegensatz zu dem linearen Verlauf 410 aus Figur 4. Kurve 520 zeigt einen Verlauf von rein messwertbasierten bzw. geberradsignalbasierten, bestimmten, aktuellen Messwerten der Drehzahl, entsprechend zu Kurve 420 aus Figur 4. Kurve 530 zeigt einen Verlauf von korrigierten Werten der Drehzahl gemäß Formel (8) abhängig von den jeweiligen Messwerten der Drehzahl, entsprechend zu Kurve 430 aus Figur 4. Kurve 540 zeigt einen Verlauf von prädizierten Werten der Drehzahl gemäß Formel (9) abhängig von den jeweiligen korrigierten Werten der Drehzahl, entsprechend zu Kurve 440 aus Figur 4. Auch in Figur 5 ist zu erkennen ist, dass durch Bestimmen des korrigierten Werts und des prädizierten Werts die Genauigkeit der Drehzahlbestimmung deutlich erhöht werden kann.

**Patentansprüche**

1. Verfahren zum Bestimmen einer Drehzahl einer drehbaren Welle (1) mit Hilfe eines mit der Welle (1) drehfest verbundenen Geberrads (12), das eine Vielzahl von Markierungen (12a) aufweist, umfassend die Schritte:

   Abtasten (210) des Geberrads (12) und Erzeugen eines Geberradsignals;
   Bestimmen (220) eines aktuellen Messwerts der Drehzahl abhängig von charakteristischen Merkmalen in dem Geberradsignal;
   Bestimmen (240) eines korrigierten Werts der Drehzahl als eine Differenz zwischen dem Doppelten des aktuellen Messwerts der Drehzahl und einem zuletzt bestimmten korrigierten Wert der Drehzahl und/oder Bestimmen (260) eines prädizierten Werts der Drehzahl abhängig von dem aktuellen Messwert der Drehzahl und/oder von dem korrigierten Wert der Drehzahl und abhängig von einer prädizierten Steigung der Drehzahl über die Zeit, wobei die prädizierte Steigung erhalten wird, indem eine Krümmung des Geberradsignals in die Zukunft fortgesetzt wird.

2. Verfahren nach Anspruch 1, wobei der korrigierte Wert der Drehzahl und/oder der prädizierte Wert der Drehzahl bestimmt werden, wenn eine Periodendauer des Geberradsignals einen vorgegebenen Schwellwert erreicht (230).

3. Verfahren nach Anspruch 1 oder 2, ferner umfassend:
   Bestimmen (240) des korrigierten Werts der Drehzahl nach Bestimmen eines aktuellen charakteristischen Merkmals in dem Geberradsignal.

4. Verfahren nach einem der vorstehenden Ansprüche, ferner umfassend:
   Bestimmen (260) des prädizierten Werts der Drehzahl nach Bestimmen des korrigierten Werts der Drehzahl.

5. Verfahren nach einem der vorstehenden Ansprüche, wobei der korrigierte Wert der Drehzahl anhand der folgenden Formel bestimmt wird:

$$n_{act,i}\big(t_{f,i}\big) = 2n_{meas,i}\big(t_{f,i}, t_{f,i-1}\big) - n_{act,i-1}$$

   wobei $n_{act,i}(t_{f,i})$ der korrigierte Wert der Drehzahl ist;
   wobei $n_{meas,i}(t_{f,i}, t_{f,i-1})$ der aktuelle Messwert der Drehzahl ist;
   wobei $n_{act,i-1}$ der zuletzt bestimmten Wert der Drehzahl ist, insbesondere der zuletzt bestimmte korrigierte Wert der Drehzahl;
   wobei $t_{f,i}$ ein Zeitpunkt ist, zu welchem ein aktuelles charakteristisches Merkmal in dem Geberradsignal auftaucht;
   wobei $t_{f,i-1}$ ein Zeitpunkt ist, zu welchem ein letztes charakteristisches Merkmal in dem Geberradsignal auftaucht.

6. Verfahren nach einem der vorstehenden Ansprüche, wobei der prädizierte Wert der Drehzahl anhand der folgenden Formel bestimmt wird:

$$n(t) = n\big(t_f\big) + a_3\big(t - t_f\big)$$

   wobei n(t) der prädizierte Wert der Drehzahl zu einem Zeitpunkt $t$ ist;
   wobei $n(t_f)$ der aktuelle Messwert der Drehzahl oder der korrigierte Wert der Drehzahl ist;
   wobei $a_3$ die prädizierte Steigung ist;
   wobei $t_f$ ein Zeitpunkt ist, zu welchem ein aktuelles charakteristisches Merkmal in dem Geberradsignal auftaucht.

7. Verfahren nach einem der vorstehenden Ansprüche, wobei das Bestimmen des prädizierten Werts der Drehzahl umfasst:

Bestimmen der prädizierten Steigung der Drehzahl abhängig von einer ersten Steigung in einem ersten Abschnitt (310) der Drehzahl über die Zeit und abhängig von einer zweiten Steigung in einem zweiten Abschnitt (320) der Drehzahl über die Zeit.

**8.** Verfahren nach Anspruch 7, wobei der erste Abschnitt (310) der Drehzahl über die Zeit einem Abschnitt zwischen einem ersten Zeitpunkt ($t_1$) und einem zweiten Zeitpunkt ($t_2$) entspricht, wobei zu dem ersten Zeitpunkt ($t_1$) ein erstes charakteristisches Merkmal in dem Geberradsignal auftaucht, insbesondere ein vorletztes Merkmal, und wobei zu dem zweiten Zeitpunkt ($t_2$) ein zweites charakteristisches Merkmal in dem Geberradsignal auftaucht, insbesondere ein letztes Merkmal, wobei der zweite Zeitpunkt ($t_2$) nach dem ersten Zeitpunkt ($t_1$) liegt, wobei der zweite Abschnitt (320) der Drehzahl über die Zeit einem Abschnitt zwischen dem zweiten Zeitpunkt ($t_2$) und einem dritten Zeitpunkt ($t_3$) entspricht, wobei zu dem dritten Zeitpunkt ($t_3$) ein drittes charakteristisches Merkmal in dem Geberradsignal auftaucht, insbesondere ein aktuelles Merkmal, wobei der dritte Zeitpunkt ($t_3$) nach dem zweiten Zeitpunkt ($t_2$) liegt.

**9.** Verfahren nach Anspruch 7 oder 8, wobei die prädizierte Steigung anhand der folgenden Formel bestimmt wird:

$$a_3 = \frac{2a_2 - a_1 + a_1 a_2{}^2}{1 + 2a_1 a_2 - a_2{}^2}$$

wobei $a_1$ die erste Steigung ist;
wobei $a_2$ die zweite Steigung ist;
wobei $a_3$ die prädizierte Steigung ist.

**10.** Verfahren nach einem der vorstehenden Ansprüche, wobei die sich drehende Welle (1) eine Welle in einem Fahrzeug ist, insbesondere eine Getriebewelle, eine Abtriebswelle, eine Antriebswelle oder eine Kurbelwelle.

**11.** Recheneinheit (20) umfassend einen Prozessor, der so konfiguriert ist, dass er das Verfahren nach einem der vorstehenden Ansprüche ausführt.

**12.** Computerprogramm umfassend Befehle, die bei der Ausführung des Programms durch einen Computer diesen veranlassen, das Verfahren nach Anspruch 1 bis 10 auszuführen.

**13.** Computerlesbarer Datenträger, auf dem das Computerprogramm nach Anspruch 12 gespeichert ist.

Fig. 1

Fig. 2

Fig. 3

Fig. 4

**Fig. 5**

Europäisches Patentamt
European Patent Office
Office européen des brevets

# EUROPÄISCHER RECHERCHENBERICHT

Nummer der Anmeldung

EP 25 15 0846

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2010 009648 A1 (BOSCH GMBH ROBERT [DE]) 1. September 2011 (2011-09-01) | 1-4,6-13 | INV. G01P21/02 |
| Y | * Seite 3, Absatz 0024 - Seite 6, Absatz 0045 * | 1,5 | G01P3/481 |
| | * Seite 11, Absatz 0082 - Absatz 0083; Abbildungen 1-4, 12 * | | ADD. G01D5/12 |
| | - - - - - | | |
| X | DE 10 2011 090151 A1 (BOSCH GMBH ROBERT [DE]) 4. Juli 2013 (2013-07-04) | 1-4,6-13 | |
| Y | * das ganze Dokument * | 1,5 | |
| | - - - - - | | |
| X | CN 115 573 824 A (SAIC MOTOR CORP LTD) 6. Januar 2023 (2023-01-06) | 1-4,6-13 | |
| Y | * das ganze Dokument * | 1,5 | |
| | - - - - - | | |
| X | DE 10 2010 001257 A1 (BOSCH GMBH ROBERT [DE]) 28. Juli 2011 (2011-07-28) | 1-4,6-13 | |
| Y | * Seite 2, Absatz 0008 - Seite 10, Absatz 0079; Abbildungen 1-5 * | 1,5 | |
| | - - - - - | | |
| Y | DE 195 40 106 A1 (MITSUBISHI ELECTRIC CORP [JP]) 10. Oktober 1996 (1996-10-10) * Spalte 2, Zeile 33 - Zeile 53; Abbildung 24 * | 1,5 | RECHERCHIERTE SACHGEBIETE (IPC) G01P G01D |
| | - - - - - | | |
| A | DE 10 2019 201730 A1 (BOSCH GMBH ROBERT [DE]) 13. August 2020 (2020-08-13) * das ganze Dokument * | 1-13 | |
| | - - - - - | | |

Der vorliegende Recherchenbericht wurde für alle Patentansprüche erstellt

| Recherchenort | Abschlußdatum der Recherche | Prüfer |
|---|---|---|
| München | 15. Mai 2025 | Springer, Oliver |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                     EP 25 15 0846

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-05-2025

| Im Recherchenbericht angeführtes Patentdokument | Datum der Veröffentlichung | Mitglied(er) der Patentfamilie | Datum der Veröffentlichung |
|---|---|---|---|
| DE 102010009648 A1 | 01-09-2011 | CN 102782303 A | 14-11-2012 |
| | | DE 102010009648 A1 | 01-09-2011 |
| | | EP 2539576 A1 | 02-01-2013 |
| | | US 2013125636 A1 | 23-05-2013 |
| | | WO 2011104248 A1 | 01-09-2011 |
| DE 102011090151 A1 | 04-07-2013 | CN 104024629 A | 03-09-2014 |
| | | DE 102011090151 A1 | 04-07-2013 |
| | | EP 2798196 A1 | 05-11-2014 |
| | | US 2014336906 A1 | 13-11-2014 |
| | | WO 2013098324 A1 | 04-07-2013 |
| CN 115573824 A | 06-01-2023 | KEINE | |
| DE 102010001257 A1 | 28-07-2011 | CN 102713247 A | 03-10-2012 |
| | | DE 102010001257 A1 | 28-07-2011 |
| | | EP 2529105 A1 | 05-12-2012 |
| | | US 2013054185 A1 | 28-02-2013 |
| | | WO 2011091942 A1 | 04-08-2011 |
| DE 19540106 A1 | 10-10-1996 | CN 1135038 A | 06-11-1996 |
| | | DE 19540106 A1 | 10-10-1996 |
| | | FR 2732109 A1 | 27-09-1996 |
| | | JP 3367260 B2 | 14-01-2003 |
| | | JP H08261794 A | 11-10-1996 |
| | | US 5721546 A | 24-02-1998 |
| DE 102019201730 A1 | 13-08-2020 | KEINE | |

EPO FORM P0461

Für nähere Einzelheiten zu diesem Anhang : siehe Amtsblatt des Europäischen Patentamts, Nr.12/82